# EUROPÄISCHE PATENTSCHRIFT

(11) **EP 1 526 911 B1**
(45) Veröffentlichungstag und Bekanntmachung des Hinweises auf die Patenterteilung: **12.10.2011**
(21) Anmeldenummer: 03742545.1
(22) Anmeldetag: 19.02.2003
(51) Int. Cl.: B01D 39/00

(54) **HEISSSIEGELFÄHIGE FILTERMATERIALIEN**
HEAT SEALING FILTER MATERIALS
MAT RIAUX DE FILTRAGE THERMOSOUDABLES

(30) Priorität: 19.02.2002 DE 10206926
(43) Veröffentlichungstag der Anmeldung: 04.05.2005
(73) Patentinhaber: PAPIERFABRIK SCHOELLER & HOESCH GMBH & CO. KG, 76593 Gernsbach (DE)
(72) Erfinder: HEINRICH, Günter, 76593 Gernsbach (DE); KAUSSEN, Manfred, 77833 Ottersweier (DE); MEGER, Danny, 76593 Gernsbach (DE)
(74) Vertreter: Henkel, Breuer & Partner
(86) Internationale Anmeldenummer: PCT/EP2003/001673
(87) Internationale Veröffentlichungsnummer: WO 2003/070354

(56) Entgegenhaltungen:
- EP-A- 0 641 817
- DE-A- 19 719 807

## Beschreibung

Die vorliegende Erfindung betrifft ein heißsiegelfähiges Filtermaterial mit ausgezeichneter Heißwasserbeständigkeit und biologischer Abbaubarkeit, das als eine Komponente biologisch abbaubare und kompostierbare, ausgezeichnet heißsiegelfähige Polymerfasern enthält.

Es ist bekannt, Tee oder anderes Füllgut in Beutel zu verpacken, die für den Gebrauch mit heißem Wasser aufgebrüht werden. Üblicherweise bestehen diese Beutel aus einer ersten Lage eines porösen Materials aus Naturfasern und einer zweiten Lage aus heißschmelzenden Polymerfasern wie beispielsweise PP, PE oder verschiedenen Mischpolymerisaten. Diese zweite Lage dient zum Verschließen des Beutels durch eine Heißversiegelung auf schnellaufenden Abpackmaschinen.

Dieses Beutelmaterial kann in bekannter Art und Weise nach einem wet-laid Verfahren auf einer Papiermaschine, einem dry-laid Verfahren auf einer Vlieslegemaschine oder einem Schmelz-Blasverfahren(Melt-Blown) durch Ablage von Polymerfasern auf eine Trägerschicht hergestellt werden.

Die erste Lage des Materials hat im allgemeinen ein Flächengewicht von 8-40 *g*/*m²,* vorzugsweise 10-20 g/m², die zweite Polymerfaserlage ein Flächengewicht von 1-15 g/m², vorzugseise 1,5-10 g/m².

Es ist bekannt, daß die gebrauchten Filterbeutel auf einem Komposthaufen oder über die Biomülltonne entsorgt werden. Nach einem gewissen Zeitraum, der von weiteren Parametern wie Temperatur, Feuchtigkeit, Mikroorganismen etc. abhängt, ist die Naturfaserkomponente des Filterbeutels zerfallen -und biologisch abgebaut, während das thermoplastische Polymerfasernetz erhalten bleibt und die Qualität des Komposts vermindert.

Eine Trennung der Naturfaserkomponente von der thermoplastischen Polymerkomponente ist nicht praktikabel, d.h. der gebrauchte Filterbeutel müßte dem nicht wieder verwertbaren Abfall (Graue Tonne) zugeführt werden.

In der EP-A-0 380 127 wird ein heißsiegelfähiges Teebeutelpapier mit einem Flächengewicht von 10-15 g/m² beschrieben, welches zur Heißversiegelung mit Polymeren wie PP, PE oder einem Mischpolymerisat versehen ist und daher nicht biologisch abbaubar ist.

In der EP-A-0 656 224 wird ein Filtermaterial insbesondere zur Herstellung von Teebeuteln und Kaffeebeuteln bzw. Filtern mit einem Flächengewicht zwischen 8 und 40 g/m² beschrieben, bei welchem die heißsiegelfähige Lage aus Kunststofffasern besteht, bevorzugt aus Polypropylen oder Polyethylen, die in erweichtem Zustand auf die erste aus natürlichen Fasern bestehende Lage abgelegt wird.

In der JP-A-2001-131826 wird die Herstellung von biologisch abbaubaren Monofilamenten aus Poly-L-Lactid und die anschließende Herstellung von daraus gewebten, voll synthetischen Teebeuteln nach einem dry-laid-Prozess beschrieben.

In der deutschen Patentanmeldung DE-A 21 47 321 wird eine thermoplastische, heißsiegelfähige Masse beschrieben, die aus einem Polyolefinpulver (Polyethylen oder Polypropylen) besteht, welches in einer Trägermatrix aus Vinylchlorid/Vinylacetat-Copolymer eingebettet ist. Auch dieses Material wird zur heißsiegelfähigen Ausrüstung von papiermäßig hergestelltem Fasermaterial verwendet.

In der DE-A-197 19 807 wird ein biologisch abbaubares heißsiegelfähiges Filtermaterial, das aus mindestens einer Lage von Naturfasern und mindestens einer zweiten Lage von heißsiegelfähigem synthetischem Material, welches biologisch abbaubar ist, beschrieben. Dieses Filtermaterial wird erhalten, indem auf einem Papiermaschinensieb in einer ersten Stufe als wässrige Suspension die Naturfasern aufgebracht und in einer zweiten Stufe die heißsiegelfähigen, biologisch abbaubaren Polymerfasern auf die Naturfaserschicht derart abgelagert werden, dass sie die Naturfaserschicht teilweise durchdringen können.

Bei einem aus diesem Filtermaterial beispielsweise hergestellten Teefilterbeutel wird die Möglichkeit einer hohen Partikelrückhaltung geschaffen. Diese wird jedoch durch eine reduzierte Luftdurchlässigkeit "erkauft". Eine hohe Luftdurchlässigkeit bei gleichzeitig guter Partikelrückhaltung ist jedoch das angestrebte Ziel eines optimalen Filtermaterials.

Die aus dem Stand der Technik bekannten Filtermaterialien kranken somit zumindest an einem der folgenden Nachteile:
1. Die gebrauchten Filtermaterialien wie z.B. Teebeutel, Kaffeebeutel oder auch andere Filter, werden häufig auf einem Komposthaufen oder über die Biomülltonne entsorgt. Nach einem gewissen Zeitraum, der von weiteren Parametern, wie Temperatur, Luftfeuchtigkeit, Mikroorganismen etc. abhängt, ist die Naturfaserkomponente des Filters zerfallen und biologisch abgebaut, während das thermoplastische Polymerfasernetz aus nicht vollständig biologisch abbaubaren Polymerfasern erhalten bleibt und die Qualität des Komposts vermindert.
   Und/oder
2. Die Verwendung von aus dem Stand der Technik bekannten, vollständig biologisch abbaubaren Polymermaterialien für Teebeutel und ähnliche Filterpapiere führt dazu, dass die gebildeten Heißsiegelnähte der Teebeutel einer Temperatur von etwa 90-100 °C nicht standhalten.

Dies ist darauf zurückzuführen, dass die Herstellung von gefüllten, heißversiegelten Teebeuteln auf schnell laufenden Abpackautomaten mit einer Taktzeit von etwa 1000 Beutel pro Minute erfolgt.

Sogenannte Heißsiegelwalzen versiegeln im allgemeinen in einer Taktzeit von weniger als 1 Sekunde den Beutel bei einer Temperatur von 150-230 °C. Bei diesen kurzen Taktzeiten muß das heißsiegelnde Material schmelzen, miteinander verkleben und sogleich wieder verfestigen und kristallisieren, damit beim Weitertransport der Beutel bereits wieder verschlossen ist und kein Füllgut austreten kann.

Wie oben erwähnt, erfüllen die aus dem Stand der Technik bekannten Materialien die Anforderungen dieses Prozesses jedoch nicht.

Aufgabe der vorliegenden Erfindung war es deshalb, ein biologisch abbaubares und kompostierbares Filtermaterial mit ausgezeichneter Heißsiegelfähigkeit und guter Siegelnahtfestigkeit im trockenen und nassen Zustand zu schaffen.

Außerdem soll ein Verfahren zur Herstellung derartiger Filtermaterialien beschrieben werden.

Überraschenderweise wurde nun festgestellt, dass unter Mitverwendung von biologisch abbaubaren und kompostierbaren, verstreckten Polymerfasern die oben beschriebenen Nachteile der Filtermaterialien des Standes der Technik überwunden und Filtermaterialien bereitgestellt werden können, die biologisch abbaubar und kompostierbar sind und gleichzeitig ausgezeichnete Eigenschaften bezüglich Heißsiegelfähigkeit und Siegelnahtfestigkeit liefern.

Gegenstand der vorliegenden Erfindung ist ein Filtermaterial, wie es in Patentansprunch 1 beschrieben ist.

Die verstreckten, heißsiegelfähigen, biologisch abbaubaren und kompostierbaren Polymerfasern sind in dem erfindungsgemäßen Filtermaterial üblicherweise in einer Menge von 0,05 bis 50 Gew.-%, bezogen auf das Papiergewicht der fertigen Filtermaterials, zweckmäßigerweise in einer Menge von 0,1 bis 45 Gew.-% und vorzugsweise in einer Menge von 1,0 bis 35 Gew.-% vorhanden.

Unter dem Begriff "biologisch abbaubare und kompostierbare Polymerfasern", die erfindungsgemäß verwendet werden, verstehen wir vollständig biologisch abbaubare und kompostierbare Polymerfasern gemäß DIN 54900.

Die erfindungsgemäß verwendeten, verstreckten, heißsiegelfähigen, biologisch abbaubaren und kompostierbaren Polymerfasern besitzen üblicherweise eine längenbezogene Masse (DIN 1301, T1) von 0,1 bis 10 dtex, vorzugsweise von 1,0 bis 6 dtex.

Ferner weisen die erfindungsgemäß verwendeten, verstreckten, heißsiegelfähigen, biologisch abbaubaren und kompostierbaren Polymerfasern ein Verstreckungsverhältnis von 1,2 bis 8, vorzugsweise von 2 bis 6 auf. Die durch diese Verstreckung induzierte Kristallisation der Polymerfasern erhöht die Beständigkeit dieser Fasern nach der Heißsiegelung gegenüber kochendem Wasser.

Das Verstreckungsverhältnis wurde hierbei erfindungsgemäß in einer derm. Fachmann auf dem einschlägigen Fachgebiet allgemein bekannten Weise bestimmt.

Das erfindungsgemäß erforderliche Verstreckungsverhältnis lässt sich bei der Herstellung der erfindungsgemäß eingesetzten Polymerfasern einstellen, indem die Polymerfaserherstellung nach einem Schmelzspinnverfahren auf handelsüblichen Spinnanlagen so erfolgt, dass Polymerfasern mit einem Verstreckungsverhältnis von 1,2 bis 8, vorzugsweise 2 bis 6 erhalten werden. Als günstige Verfahrensparameter zur Herstellung bevorzugter erfindungsgemäß verwendbarer verstreckter Polymerfasern haben sich dabei die folgenden Parameter erwiesen:
- Spinntemperatur: 180 bis 250 °C, vorzugsweise 190 bis 240 °C;
- Kühllufttemperatur: 10 bis 60 °C, vorzugsweise 20 bis 50 °C;
- Heißverstreckung bei 85 bis 180 °C, vorzugsweise 120 bis 160 °C.

Üblicherweise wird bei der Verstreckung der Polymerfasern eine hydrophile Substanz mitverwendet, um aufgrund ihrer Netzeigenschaften die Wasseraufnahme zu verbessern.

In einer bevorzugten Ausführungsform werden die Polymerfasern nach der Verstreckung, d.h. nach Erhalt auf der Spinnanlage, ferner thermisch fixiert. Dies dient dazu, eine Schrumpfung der verstreckten Polymerfasern zu minimieren. Üblicherweise erfolgt diese thermische Fixierung durch eine thermische Behandlung der verstreckten Polymerfasern bei Temperaturen von 10 bis 40 °C unterhalb des jeweiligen Schmelzpunkts der Polymerfasern.

Die erhaltenen verstreckten Polymerfasern werden ferner üblicherweise vor Einarbeiten der verstreckten Polymerfasern im Rahmen des Filtermaterialherstellungsprozesses auf eine Länge von 1 bis 20 mm, zweckmäßigerweise 1 bis 10 mm und vorzugsweise 2 bis 6 mm zurechtgeschnitten. Dieses Schneiden der erhaltenen Polymerfasern erfolgt üblicherweise mit handelsüblichen Schneidwerkzeugen für Filamente.

Die erfindungsgemäß verwendeten biologisch abbaubaren und kompostierbaren, verstreckten Polymerfasern sind nicht nur, wie oben ausgeführt, heißsiegelfähig, sondern besitzen ferner die Eigenschaft, dass unter Verwendung des erfindungsgemäßen Filtermaterials (wie oben beschrieben) mithilfe einer Heißsiegelwalze ausgebildete Heißversiegelungsnähte ausgezeichnet heißwasserstabil ist. Unter dem Begriff "heißwasserstabil" wird hierbei erfindungsgemäß eine Beständigkeit bzw. Unversehrtheit einer Heißsiegelnaht eines aus dem erfindungsgemäßen Filtermaterial hergestellten Filterbeutels im Laufe des Aufbrühvorgangs während 4 min verstanden.

Die Heißsiegelung des erfindungsgemäßen Filtermaterials kann in einer bevorzugten Ausführungsform durch Ultraschallbehandlung erfolgen.

Bei den Ausgangsmaterialien für die verstreckten Polymerfasern handelt es sich erfindungsgemäß um Polymere, die aus der Gruppe der aliphatischen oder teilaromatischen Polyesteramide und aliphatischen oder teilaromatischen Polyester ausgewählt sind.

Im einzelnen handelt es sich hierbei um die folgenden Polymere:
Aliphatische oder teilaromatische Polyester:
   A) aus aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, bevorzugt mit 5 oder 6 C-Atomen im cycloaliphatischen Ring, wie beispielsweise Cyclohexandimethanol, und/oder teilweise oder vollständig statt der Diole monomeren oder oligomeren Polyolen auf der Basis von Ethylenglykol, Propylenglykol, Tetrahydrofuran oder Copolymeren daraus mit Molekulargewichten bis 4000, bevorzugt bis 1000, und/oder gegebenenfalls geringen Mengen verzweigten bifunktionellen Alkoholen, bevorzugt C₃-C₁₂-Alkyldiolen, wie beispielsweise Neopentylglykol, und zusätzlich gegebenenfalls geringen Mengen höherfunktionellen Alkoholen wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure und/oder gegebenenfalls aromatischen bifunktionellen Säuren wie beispielsweise Terephthalsäure, Phthalsäure, Naphthalindicarbonsäure und zusätzlich gegebenenfalls geringen Mengen höherfunktionellen Säuren wie beispielsweise Trimellitsäure oder
   B) aus säure- und alkoholfunktionalisierten Bausteinen, vorzugsweise mit 2 bis 12 C-Atomen in der Alkylkette beispielsweise Hydroxybuttersäure, Hydroxyvaleriansäure, Milchsäure, oder deren Derivaten, beispielsweise ε-Caprolacton oder Dilactid,
      oder einer Mischung und/oder einem Copolymer enthaltend A und B,
      wobei die aromatischen Säuren nicht mehr als 50 Gew.-% Anteil, bezogen auf alle Säuren, ausmachen.
Aliphatische oder teilaromatische Polyesteramide:
   C) aus aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, vorzugsweise mit 5 bis 8 C-Atomen im cycloaliphatischen Ring, wie beispielsweise Cyclohexandimethanol, und/oder teilweise oder vollständig statt der Diole monomeren oder oligomeren Polyolen auf der Basis von Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise mit C₂-C₁₂-Alkyldicarbonsäuren, wie beispielsweise Neopentylglykol und zusätzlich gegebenenfalls geringen Mengen höherfunktionellen Alkoholen wie beispielsweise 1,2,3-Propantriol, Trimethylolpropan sowie aus aliphatischen bifunktionellen Säuren wie beispielsweise und bevorzugt Bernteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
   D) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure oder deren Derivaten, beispielsweise ε-Caprolacton oder Dilactid,
      oder einer Mischung und/oder einem Copolymer enthaltend C) und D), wobei die aromatischen Säuren nicht mehr als 50 Gew.-% Anteil. bezogen auf alle Säuren, ausmachen,
   E) einem Amidanteil aus aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder gegebenenfalls geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
   F) aus einem Amidanteil aus säure- und aminfunktionalisierten Bausteinen, vorzugsweise mit 4 bis 20 C-Atomen in der cycloaliphatischen Kette, bevorzugt ω-Laurinlactam, ε-Caprolactam, besonders bevorzugt ε-Caprolactam,
   oder einer Mischung enthaltend E) und F) als Amidanteil, wobei
   der Esteranteil C) und/oder D) mindestens 20 Gew.-%, bezogen auf die Summe aus C), D), E) und F) beträgt, vorzugsweise der Gewichtsanteil der Esterstrukturen 20 bis 80 Gew.-%, der Anteil der Amidstrukturen 80 bis 20 Gew.-% beträgt.

Alle als Säuren genannten Monomere können auch in Form von Derivaten wie beispielsweise Säurechloride oder Ester, sowohl als Monomere als auch als oligomere Ester, eingesetzt werden.

Die Synthese der erfindungsgemäß verwendeten biologisch abbaubaren und kompostierbaren Polyesteramide kann sowohl nach der "Polyamid-Methode" durch stöchiometrisches Mischen der Ausgangskomponenten gegebenenfalls unter Zusatz von Wasser und anschließendes Entfernen von Wasser aus dem Reaktionsgemisch als auch nach der "Polyester-Methode" durch stöchiometrisches Mischen der Ausgangskomponenten sowie Zugabe eines Überschusses an Diol mit Veresterung der Säuregruppen und nachfolgender Umesterung bzw. Umamidierung dieser Ester erfolgen. In diesem zweiten Fall wird neben Wasser auch der Überschuss an Diol wieder abdestilliert. Bevorzugt ist die Synthese nach der beschriebenen "Polyester-Methode".

Die Polykondensation kann weiterhin durch den Einsatz von bekannten Katalysatoren beschleunigt werden. Sowohl die bekannten Phosphorverbindungen, die eine Polyamidsynthese beschleunigen, als auch saure oder metallorganische Katalysatoren für die Veresterung wie auch Kombinationen aus den beiden sind zur Beschleunigung der Polykondensation möglich.

Es ist darauf zu achten, dass die gegebenenfalls verwendeten Katalysatoren weder die biologische Abbaubarkeit bzw. Kompostierbarkeit noch die Qualität des resultierenden Komposts negativ beeinflussen.

Weiterhin kann die Polykondensation zu Polyesteramiden durch die Verwendung von Lysin, Lysinderivaten oder von anderen amidisch verzweigenden Produkten wie beispielsweise Aminoethylaminoethanol beeinflußt werden, die sowohl die Kondensation beschleunigen als auch zu verzweigten Produkten führen (siehe beispielsweise EP-A-0 641 817; DE-A-38 31 709).

Die Herstellung von Polyestern ist allgemein bekannt bzw. wird nach bekannten Verfahren analog durchgeführt.

Die erfindungsgemäß verwendeten Polyester oder Polyesteramide können weiterhin 0,1 bis 5 Gew.-%, bevorzugt 0,1 bis 3 Gew.-%, insbesondere 0,1 bis 1 Gew.-% an Additiven, bezogen auf das Polymer, enthalten (vgl. auch Beschreibung der Polymere). Beispiele für diese. Additive sind Modifizierungsmittel und/oder Füll- und Verstärkungsstoffe und/- oder Verarbeitungshilfsmittel wie beispielsweise Nukleierungshilfsmittel, übliche Weichmacher, Entformungshilfsmittel, Flammschutzmittel, Schlagzähigkeitsmodifikatoren, farbgebende Mittel, Stabilisatoren und sonstige im Thermoplastbereich übliche Zusatzmittel, wobei im Hinblick auf die Anforderung der biologischen Abbaubarkeit darauf zu achten ist, dass die vollständige Kompostierbarkeit durch die Additive nicht beeinträchtigt wird und die im Kompost verbleibenden Additive unschädlich sind.

Die biologisch abbaubaren und kompostierbaren Polyester und Polyesteramide haben in der Regel ein Molgewicht von 5.000 bis 500.000 g/mol, zweckmäßigerweise von 5.000 bis 350.000 g/mol, vorzugsweise von 10.000 bis 250.000 g/mol, ermittelt durch Gelchromatographie (GPC) beispielsweise in m-Kresol gegen einen Polystyrolstandard. Vorzugsweise weisen die biologisch abbaubaren und kompostierbaren Polymere im Falle von Copolymeren eine statistische Verteilung der Ausgangsmonomeren auf.

In einer bevorzugten Ausführungsform handelt es sich bei den Ausgangsmaterialien für die verstreckten Polymerfasern um Polyesteramide mit einem Esteranteil von 40 bis einschließlich 65 Gew.-% und einem Amidanteil von 35 bis einschließlich 60 Gew.-%, beispielsweise ein Polyesteramid aus AH-Salz, Adipinsäure, Butandiol mit einem Amidgehalt von 60 Gew.-% und einem Estergehalt von 40 Gew.-% und einem massegemittelten Molekulargewicht von 19.300 (ermittelt mittels GPC in m-Kresol gegen Polystyrolstandard), ausgewählt.

In besonders bevorzugter Weise sind erfindungsgemäß die eingesetzten Ausgangsmaterialien für die verstreckten Polymerfasern solche mit einem Feuchtigkeitsgehalt von 0,1 Gew.-% oder kleiner, bezogen auf das Ausgangsmaterialpolymer, vorzugsweise solche mit einem Feuchtigkeitsgehalt von 0,01 Gew.-% oder kleiner, um Störungen beim Verspinnen und Verstrecken der Polymerfasern zu verhindern.

Bei den erfindungsgemäß einsetzbaren Naturfasern handelt es sich um die dem Fachmann auf dem einschlägigen Fachgebiet bekannten Naturfasern, wie Hanf, Manila, Jute, Sisal und andere, sowie langfaseriger Holzzellstoff.

In einer weiteren, noch stärker bevorzugten Ausführungsform enthält das erfindungsgemäße Filtermaterial ferner ein Kristallisatioriskeimmaterial, das die Kristallisation der verstreckten Polymerfasern bei der Heißversiegelung unterstützt.

Als Kristallisationskeimmaterial eignen sich erfindungsgemäß anorganische Materialien wie Talkum, Kaolin oder ähnliche Materialien, üblicherweise in feinst verteilter Form.

Die Teilchengröße des Kristallisationskeimmaterials beträgt üblicherweise 0,1 bis 5 µm.

Die zugegebene Menge des Kristallisationskeimmaterials beträgt üblicherweise 0,01 bis 1,0 Gew.%.

Im folgenden wird eine Ausführungsform der erfindungsgemäßen Filtermaterialien sowie deren Herstellung detaillierter beschrieben.

Die erfindungsgemäßen Filtermaterialien umfassen neben der oben genannten Komponente aus Polymerfasern mindestens eine weitere Komponente, die natürliche Fasern umfasst oder vorzugsweise aus diesen besteht.

In dieser bevorzugten Ausführungsform der vorliegenden Erfindung wird das erfindungsgemäße Filtermaterial somit aus zwei oder mehr Lagen unterschiedlicher Komponenten hergestellt, wobei mindestens eine Lage natürliche Fasern und eine Lage Polymerfasern enthält, wobei gilt, dass sich die mindestens zwei Lagen nach der Herstellung des Filtermaterials teilweise durchdringen können. Der Grad der Durchdringung der Lagen kann durch das Herstellungsverfahren des Filtermaterials, beispielsweise im Falle der Verwendung einer Papiermaschine durch Einstellen des Entwässerungsgrads auf dem Sieb, gesteuert werden.

Die Lage aus den Polymerfasern kann auf der Papiermaschine auf der Lage aus natürlichen Fasern abgelegt und dabei sowohl miteinander als auch mit der Papierlage verschmolzen werden.

Die erste Lage des Filtermaterials hat im allgemeinen ein Flächengewicht zwischen 8 und 40 g/m², vorzugsweise von 10 bis 20 g/m² und eine Luftdurchlässigkeit von 300 bis 4000 1/m²·s (DIN ISO 9237), vorzugsweise von 500 bis 3000 1/m²·s.

Die zweite Lage des Filtermaterials hat im allgemeinen ein Flächengewicht zwischen 1 und 15 g/m², vorzugsweise von 1,5 bis 10 g/m².

Die erste Lage des Filtermaterials mit bzw. bevorzugt aus natürlichen Fasern ist vorzugsweise nassfest ausgebildet.

Für die erste Lage mit bzw. bevorzugt aus Naturfasern werden erfindungsgemäß gewöhnlich bekannte Naturfasern, wie Hanf, Manila, Jute, Sisal und andere langfaserige Holzzellstoffe sowie bevorzugt Gemische hiervon verwendet.

Die zweite Lage kann die Polymerfasern enthalten sowie daraus bestehen. Bevorzugt umfasst die zweite Lage neben den Polymerfasern einen weiteren Bestandteil, insbesondere Naturfasern, wobei Mischungsverhältnisse von 1/3 Naturfasern und 2/3 Polymerfasern besonders bevorzugt sind.

Das erfindungsgemäße Filtermaterial kann beispielsweise zur Herstellung von Teebeuteln, Kaffeebeuteln oder Tee- bzw. Kaffeefiltern verwendet werden.

Wie oben ausgeführt, kann das Verfahren zur Herstellung der erfindungsgemäßen Filtermaterialien so gesteuert werden, dass die biologisch abbaubaren und kompostierbaren heißsiegelfähigen Fasern der zweiten Lage die erste Lage teilweise durchdringen und die Fasern der ersten Lage, vorzugsweise die Naturfasern der ersten Lage, somit beim Trocknungsprozess beispielsweise auf der Papiermaschine im geschmolzenen Zustand umhüllen. Dabei werden jedoch erfindungsgemäß die notwendigen Poren für eine Filtration freigelassen.

Im folgenden werden die erfindungsgemäß verwendbaren Herstellungsverfahren anhand der Figuren am Beispiel eines zweilagigen Filtermaterials näher erläutert.

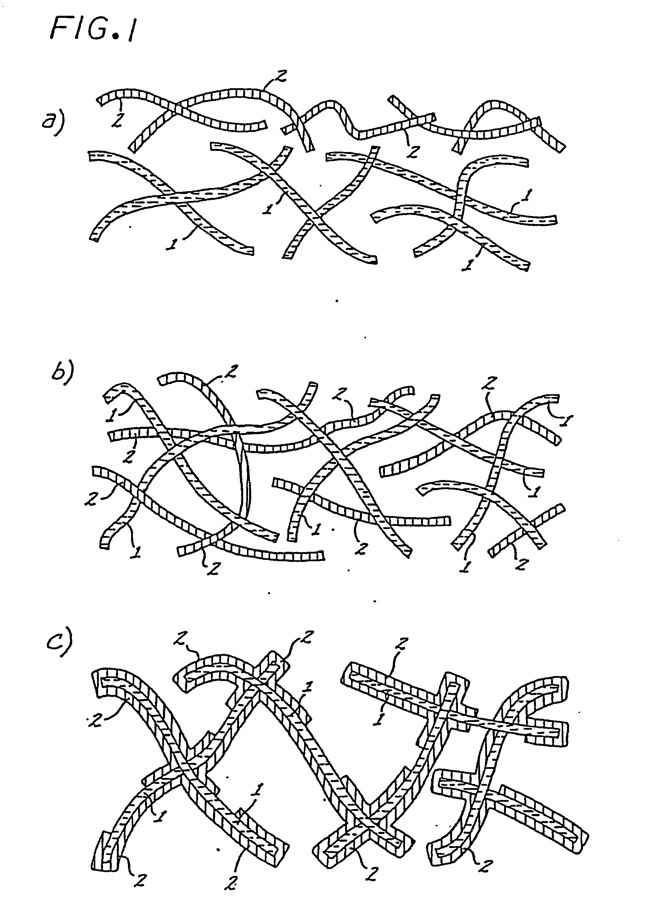

Dabei zeigt Fig. 1 die verschiedenen Stadien bei der Bildung des erfindungsgemäßen Filtermaterials aus Naturfasern und synthetischen Fasern am Beispiel der Verwendung einer Papiermaschine in einer allgemeinen, grob schematischen Darstellung.

In Fig. 1 ist in einer schematischen Darstellung die Bildung des erfindungsgemäßen Filtermaterials gezeigt. Dabei ist in Fig. 1a) die Bildung einer ersten Faserschicht aus Naturfasern 1 und die Bildung einer zweiten Faserschicht mit synthetischen, biologisch abbaubaren und kompostierbaren heißsiegelfähigen Fasern 2 dargestellt. Die Bildung der zweiten Schicht mit den Fasern 2 erfolgt also durch Ablagerung über der ersten Schicht, welche durch die Naturfasern 1 gebildet ist. In der Zeichnung sind zur Unterscheidung die Naturfasern 1 waagerecht schraffiert, während die heißsiegelfähigen Fasern 2 annähernd senkrecht schraffiert wurden.

Fig. 1b) zeigt, wie durch die beschriebene Entwässerung der beiden Schichten, insbesondere der zweiten Schicht mit den Fasern 2, eine teilweise Durchdringung der beiden Schichten erzielt wird, so dass die synthetischen Fasern 2 zwischen die Naturfasern 1 gelangen.

In einem weiteren Herstellungsschritt werden die einander teilweise durchdringenden Schichten 1 und 2 getrocknet und dabei derart erhitzt, dass die synthetischen Fasern 2 schmelzen und sich bei der Wiederverfestigung so um die Fasern 1 legen, dass diese zumindest teilweise umhüllt werden. Das Filtermaterial ist somit heißsiegelfähig geworden (Fig. lc).

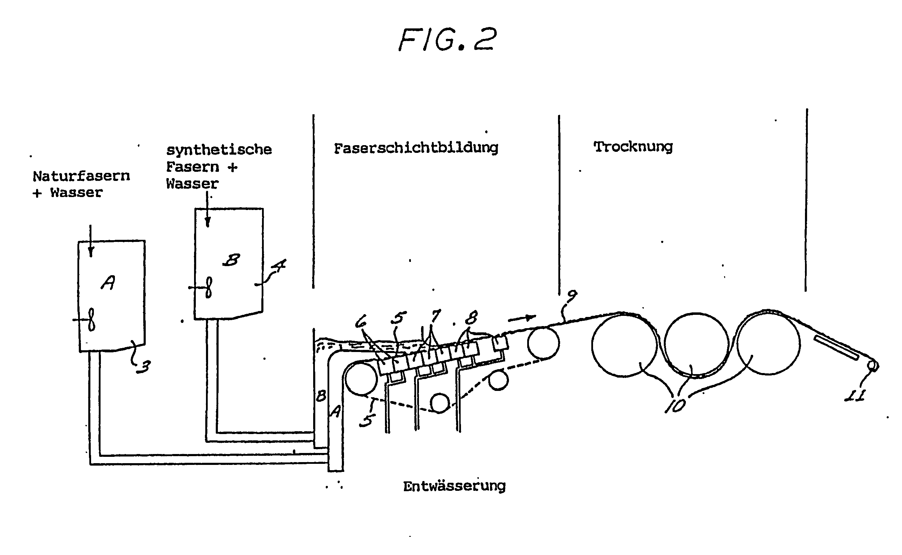

Fig. 2 zeigt den grundsätzlichen Aufbau einer Papiermaschine, wie sie zur Herstellung eines erfindungsgemäßen Filtermaterials verwendet werden kann. Zunächst wird aus den gemahlenen Naturfasern und Wasser eine Suspension "A" gebildet. Außerdem wird aus Polymerfasern sowie gegebenenfalls einem Anteil anderer Fasern, beispielsweise Naturfasern, sowie Wasser eine Suspension "B" hergestellt.

Diese beiden Suspensionen A und B werden aus den jeweiligen Behältern (3 und 4) über den sogenannten Stoffauflauf (head box) der Papiermaschine zugeführt. Diese besitzt im wesentlichen ein umlaufendes Sieb (5), welches über eine Anzahl von Entwässerungskammern (6, 7 und 8) hinweggeführt wird.

Über geeignete Rohrleitungen und Pumpvorrichtungen, die nicht näher dargestellt sind, wird die Suspension A auf das Sieb 5, über den ersten beiden Entwässerungskammern 6, geleitet, wobei durch die Kammern 6 und die Entwässerungsleitung das Wasser abgesaugt wird. Dabei bildet sich auf dem bewegten Sieb 5 eine erste Faserschicht aus den Naturfasern 1. Bei der Weiterbewegung des Siebes 5 über die Entwässerungskammern 7 wird die zweite Suspension B zugeführt, wobei über den Entwässerungskammern 7 die zweite Schicht aus synthetischen Fasern auf der ersten Schicht abgelagert wird. Die Entwässerung erfolgt dabei über die Entwässerungsleitung. Bei der Weiterbewegung des Siebes 5 mit den beiden aufeinanderliegenden Faserschichten wird über die Entwässerungskammern 8 eine Entwässerung vorgenommen, wodurch die beiden Schichten einander teilweise durchdringen. Durch entsprechende Einstellung der Entwässerung kann die Durchdringung mehr oder weniger stark sein.

Das nunmehr gebildete Material 9 aus Naturfasern und Polymerfasern wird von dem Sieb abgenommen und einer Trocknung zugeführt. Diese Trocknung kann auf verschiedene Art und Weise erfolgen, z. B. durch Kontakttrocknung oder Durchströmtrocknung.

Die Elemente 10 geben nur grob schematisch den Hinweis auf entsprechende Trocknungselemente.

In Fig. 2 sind 3 Trockenzylinder 10 gezeichnet, über die die geformte Papierbahn im Kontaktverfahren getrocknet wird. Es ist jedoch auch praktikabel, die gebildete Papierbahn nur über einen Zylinder zu führen und sie mit heißer Luft zu trocknen, ohne dass die Bahn auf diesem Zylinder aufliegt.

Die Erwärmung des zweischichtigen Fasermaterials bringt die synthetischen Fasern 2 in der Mischschicht 9 zum Schmelzen. Bei der Wiederverfestigung am Ausgang der Trockenstation umhüllen die synthetischen Fasern zumindest teilweise die Naturfasern und das heißsiegelfähige Filtermaterial wird auf eine Rolle 11 aufgerollt.

Im folgenden wird die vorliegende Erfindung anhand von Beispielen detaillierter beschrieben. Es ist jedoch selbstverständlich, dass diese Beispiele die vorliegende Erfindung in keiner Weise einschränken.

### Beispiel 1:

In einem ersten Versuch wurde in an sich bekannter Weise ein zweilagiges Filtermaterial nach einem Nasslegeverfahren auf einer Papiermaschine hergestellt.

Dazu wurde auf einer Schrägsiebmaschine eine erste Lage aus Naturfasern (Gemisch aus Manilafasern (37 Gew.-%) und Nadelholzzellstoff (63 Gew.-%)) mit einem mittleren Flächengewicht von ca. 12 g/m² produziert und anschließend eine zweite Lage aus 80 Gew.-%-biologisch abbaubaren heißsiegelfähigen Polymerfasern (verstreckte Polyesteramidfasern (40% Esteranteil, 60% Amidanteil) mit einem Verstreckungsgrad von 2,8, einer Faserlänge von 4,6 mm und einem Fasertiter von 2,2 dtex) mit einem mittleren Flächengewicht von ca. 4,5 *g*/*m²* und 20 Gew.-% Nadelholzzellstoff darauf abgelegt.

Durch eine anschließende kurzzeitige, bei höherer Temperatur durchgeführter Trocknung in der Maschine verschmelzen die Polymerfasern mit der ersten Lage aus Naturfasern und bilden dann das erfindungsgemäße Filtermaterial.

Auf einer handelsüblichen Abpackmaschine (Typ C 51 der Firma Ima, Bologna, Italien) wurden aus diesem Filtermaterial heißversiegelte Teebeutel, die jeweils 1,9 g Tee enthielten, bei einer Temperatur von 185 °C hergestellt (900 Beutel/min).

Mit diesen Teebeuteln durchgeführte Tests lieferten die folgenden Ergebnisse:
Aufgußtest (20 willkürlich ausgewählte Teebeutel werden einzeln mit heißem Wasser (100 °C) übergossen und 4 min ziehen gelassen):
   Kein Beutel öffnet sich.

Als Vergleich wurde ein Filtermaterial gemäß den obigen Angaben hergestellt, wobei jedoch anstelle der biologisch abbaubaren heißsiegelfähigen Polymerfasern ein nicht-biologisch abbaubares Vinylchlorid/- Vinylacetat-Copolymer verwendet wurde.

Beim Aufgußtest öffnete sich keiner der 5 untersuchten Teebeutel.

### Beispiel 2:

Entsprechend Beispiel 1 wurden Teebeutel aus den folgenden Ausgangsmaterialien hergestellt:
Rohstoff der ersten Lage: 32 Gew.% Manilafasern, 53 Gew.-% Nadelholzzellstoff und 15 Gew.-% Laubholzzellstoff.
Rohstoff zweiten Lage: 59 Gew.% verstreckte Polyesteramidfasern (40% Esteranteil, 60% Amidanteil) mit einem Verstreckungsgrad von 4,5, einer Faserlänge von 6,0 mm und einem Fasertiter-von 2,2 dtex und 41 Gew.-% Nadelholzzellstoff.

Aufgußtest (20 willkürlich ausgewählte Teebeutel werden einzeln mit heißem Wasser (100 °C) übergossen und 4 min ziehen gelassen):
Kein Beutel öffnet sich.

## Patentansprüche

1. Filtermaterial zur Herstellung von Filterbeuteln oder Tee- bzw. Kaffeefiltern, bestehend aus
- heißsiegelfähigen, biologisch abbaubaren und kompostierbaren Polymerfasern,
- natürlichen Fasern,
- optional 0,1 bis 5 Gew.-% Additive, bezogen auf die heißsiegelfähigen, biologisch abbaubaren und kompostierbaren Polymerfasern, und
- optional Kristallisationskeimmaterial,
**dadurch gekennzeichnet ist, dass** es sich bei den heißsiegelfähigen, biologisch abbaubaren und kompostierbaren Polymerfasern um verstreckte, heißsiegelfähige, biologisch abbaubare und kompostierbare Polymerfasern mit einem Verstreckungsverhältnis von 1,2 bis 8 handelt.

2. Filtermaterial nach Anspruch 1, wobei die verstreckten, heißsiegelfähigen, biologisch abbaubaren und kompostierbaren Polymerfasern aus der folgenden Gruppe von Polymeren ausgewählt sind:
Aliphatische oder teilaromatische Polyester:
A) aus aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, bevorzugt mit 5 oder 6 C-Atomen im cycloaliphatischen Ring, wie beispielsweise Cyclohexandimethanol, und/oder teilweise oder vollständig statt der Diole monomeren oder oligomeren Polyolen auf der Basis von Ethylenglykol, Propylenglykol, Tetrahydrofuran oder Copolymeren daraus mit Molekulargewichten bis 4000, bevorzugt bis 1000, und/oder gegebenenfalls geringen Mengen verzweigten bifunktionellen Alkoholen, bevorzugt C₃-C₁₂-Alkyldiolen, wie beispielsweise Neopentylglykol, und zusätzlich gegebenenfalls geringen Mengen höherfunktionellen Alkoholen wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure und/oder gegebenenfalls aromatischen bifunktionellen Säuren wie beispielsweise Terephthalsäure, Phthalsäure, Naphthalindicarbonsäure und zusätzlich gegebenenfalls geringen Mengen höherfunktionellen Säuren wie beispielsweise Trimellitsäure oder
B) aus säure- und alkoholfunktionalisierten Bausteinen, vorzugsweise mit 2 bis 12 C-Atomen in der Alkylkette beispielsweise Hydroxybuttersäure, Hydroxyvaleriansäure, Milchsäure, oder deren Derivaten, beispielsweise ε-Caprolacton oder Dilactid,
oder einer Mischung und/oder einem Copolymer enthaltend A und B, wobei die aromatischen Säuren nicht mehr als 50 Gew.-% Anteil, bezogen auf alle Säuren, ausmachen;
aliphatische oder teilaromatische Polyesteramide:
C) aus aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, vorzugsweise mit 5 bis 8 C-Atomen im cycloaliphatischen Ring, wie beispielsweise Cyclohexandimethanol, und/oder teilweise oder vollständig statt der Diole monomeren oder oligomeren Polyolen auf der Basis von Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise mit C₂-C₁₂-Alkyldicarbonsäuren, wie beispielsweise Neopentylglykol und zusätzlich gegebenenfalls geringen Mengen höherfunktionellen Alkoholen wie beispielsweise 1,2,3-Propantriol, Trimethylolpropan sowie aus aliphatischen bifunktionellen Säuren wie beispielsweise und bevorzugt Bernteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure
oder
D) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure oder deren Derivaten, beispielsweise ε-Caprolacton oder Dilactid,
oder einer Mischung und/oder einem Copolymer enthaltend C) und D), wobei die aromatischen Säuren nicht mehr als 50 Gew.-% Anteil. bezogen auf alle Säuren, ausmachen,
E) einem Amidanteil aus aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder gegebenenfalls geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
F) aus einem Amidanteil aus säure- und aminfunktionalisierten Bausteinen, vorzugsweise mit 4 bis 20 C-Atomen in der cycloaliphatischen Kette, bevorzugt ω-Laurinlactam, ε-Caprolactam, besonders bevorzugt ε-Caprolactam,
oder einer Mischung enthaltend E) und F) als Amidanteil, wobei
der Esteranteil C) und/oder D) mindestens 20 Gew.-%, bezogen auf die Summe aus C), D), E) und F) beträgt, vorzugsweise der Gewichtsanteil der Esterstrukturen 20 bis 80 Gew.-%, der Anteil der Amidstrukturen 80 bis 20 Gew.-% beträgt.

3. Filtermaterial nach einem der Ansprüche 1 oder 2, wobei das Filtermaterial aus zwei oder mehr Lagen unterschiedlicher Komponenten hergestellt, wobei mindestens eine Lage natürliche Fasern und eine Lage Fasern Polymerfasern enthält, wobei gilt, dass sich die mindestens zwei Lagen nach der Herstellung des Filtermaterials teilweise durchdringen können.

4. Filtermaterial nach Anspruch 3, wobei die erste Lage ein Flächengewicht zwischen 8 und 40 g/m² und eine Luftdurchlässigkeit von 300 bis 4000 1/m²·s (DIN ISO 9237) aufweist.

5. Filtermaterial gemäß Anspruch 3, wobei die zweite Lage mit den biologisch abbaubaren und kompostierbaren Polymerfasern ein Flächengewicht von 1 bis 15 g/m² aufweist.

6. Filtermaterial gemäß einem der Ansprüche 3, bis 5, wobei die erste Lage aus natürlichen Fasern besteht und nassfest ausgebildet ist.

7. Verfahren zur Herstellung eines Filtermaterials nach einem der Ansprüche 1 bis 6, **dadurch gekennzeichnet, dass** im Rahmen eines Nasslegeverfahrens unter Mitverwendung von verstreckten, heißsiegelfähigen, biologisch abbaubaren und kompostierbaren Polymerfasern mit einem Verstreckungsverhältnis von 1,2 bis 8 ein Filtermaterial hergestellt wird.

8. Verwendung des Filtermaterials nach einem der Ansprüche 1 bis 6 zur Herstellung von Teebeuteln, Kaffeebeuteln oder Tee- bzw. Kaffeefiltern.

## Claims

1. Filter material for producing filter bags or tea or coffee filters, consisting of
- heatsealable, biodegradable and compostable polymeric fibers,
- natural fibers,
- optionally 0.1 to 5 % by weight of additives, based on the heatsealable, biodegradable and compostable polymeric fibers, and
- optionally crystallization seed material, **characterized in that** the heatsealable, biodegradable and compostable polymeric fibers are drawn, heatsealable, biodegradable and compostable polymeric fibers having a draw ratio which is in the range from 1.2 to 8.

2. Filter material according to claim 1, wherein the drawn, heatsealable, biodegradable and compostable polymeric fibers are selected from the following group of polymers:
aliphatic or partly aromatic polyesters:
A) from aliphatic bifunctional alcohols, preferably linear C₂ to C₁₀ dialcohols such as for example ethanediol, butanediol, hexanediol or more preferably butanediol and/or optionally cycloaliphatic bifunctional alcohols, preferably having 5 or 6 carbon atoms in the cycloaliphatic ring, such as for example cyclohexanedimethanol, and/or, partly or wholly instead of the diols, monomeric or oligomeric polyols based on ethylene glycol, propylene glycol, tetrahydrofuran or copolymers thereof having molecular weights up to 4 000, preferably up to 1 000, and/or optionally small amounts of branched bifunctional alcohols, preferably C₃-C₁₂ alkyldiols, such as for example neopentylglycol, and additionally optionally small amounts of more highly functional alcohols such as for example 1,2,3-propanetriol or trimethylolpropane and also from aliphatic bifunctional acids, preferably C₂-C₁₂ alkyldicarboxylic acids, such as for example and preferably succinic acid, adipic acid and/or optionally aromatic bifunctional acids such as for example terephthalic acid, phthalic acid, naphthalenedicarboxylic acid and additionally optionally small amounts of more highly functional acids such as for example trimellitic acids, or
B) from acid- and alcohol-functionalized building blocks, preferably having 2 to 12 carbon atoms in the alkyl chain for example hydroxybutyric acid, hydroxyvaleric acid, lactic acid, or derivatives thereof, for example ε-caprolactone or dilactide,
or a mixture and/or a copolymer containing A and B,
subject to the proviso that the aromatic acids do not account for more than a 50% by weight fraction, based on all acids;
aliphatic or partly aromatic polyesteramides:
C) from aliphatic bifunctional alcohols, preferably linear C₂ to C₁₀ dialcohols such as for example ethanediol, butanediol, hexanediol or more preferably butanediol and/or optionally cycloaliphatic bifunctional alcohols, preferably having 5 to 8 carbon atoms in the cycloaliphatic ring, such as for example cyclohexanedimethanol, and/or, partly or wholly instead of the diols, monomeric or oligomeric polyols based on ethylene glycol, propylene glycol, tetrahydrofuran or copolymers thereof having molecular weights up to 4 000, preferably up to 1 000, and/or optionally small amounts of branched bifunctional alcohols, preferably C₂-C₁₂ alkyldicarboxylic acids, such as for example neopentylglycol, and additionally optionally small amounts of more highly functional alcohols such as for example 1,2,3-propanetriol or trimethylolpropane and also from aliphatic bifunctional acids, such as for example and preferably succinic acid, adipic acid and/or optionally aromatic bifunctional acids such as for example terephthalic acid, isophthalic acid, naphthalenedicarboxylic acid and additionally optionally small amounts of more highly functional acids such as for example trimellitic acids, or
D) from acid- and alcohol-functionalized building blocks, preferably having 2 to 12 carbon atoms in the carbon chain for example hydroxybutyric acid, hydroxyvaleric acid, lactic acid, or derivatives thereof, for example ε-caprolactone or dilactide,
or a mixture and/or a copolymer containing C) and D),
subject to the proviso that the aromatic acids do not account for more than a 50% by weight fraction, based on all acids,
E) an amide fraction of aliphatic and/or cycloaliphatic bifunctional and/or optionally small amounts of branched bifunctional amines, preference is given to linear aliphatic C₂ to C₁₀ diamines, and additionally optionally small amounts of more highly functional amines, among amines: preferably hexamethylenediamine, isophoronediamine and more preferably hexamethylenediamine, and also of linear and/or cycloaliphatic bifunctional acids, preferably having 2 to 12 carbon atoms in the alkyl chain or C₅ or C₆ ring in the case of cycloaliphatic acids, preferably adipic acid, and/or optionally small amounts of branched bifunctional and/or optionally aromatic bifunctional acids such as for example terephthalic acid, isophthalic acid, naphthalenedicarboxylic acid and additionally optionally small amounts of more highly functional acids, preferably having 2 to 10 carbon atoms, or
F) from an amide fraction of acid- and amine-functionalized building blocks, preferably having 4 to 20 carbon atoms in the cycloaliphatic chain, preferably ω-laurolactam, ε-caprolactam, and more preferably ε-caprolactam,
or a mixture containing E) and F) as an amide fraction, subject to the proviso that
the ester fraction C) and/or D) is at least 20% by weight, based on the sum total of C), D), E) and F), preferably the weight fraction of the ester structures is in the range from 20 to 80% by weight and the fraction of amide structures in the range from 80 to 20% by weight.

3. Filter material according to any one of claims 1 or 2, wherein the filter material produced from two or more plies of different components, at least one ply containing natural fibers and one ply fibers containing polymeric fibers, subject to the proviso that the at least two plies be able to partially interpenetrate each other after the production of the filter material.

4. Filter material according to claim 3, wherein the first ply has a basis weight between 8 and 40 g/m² and a DIN ISO 9237 air permeability from 300 to 4 000 1/m²·s.

5. Filter material according to claim 3, wherein the second ply with the biodegradable and compostable polymeric fibers has a basis weight from 1 to 15 g/m².

6. Filter material according to any one of claims 3 to 5, wherein the first ply consists of natural fibers and is constructed to have wet strength.

7. A process for producing a filter material according to any one of claims 1 to 6, **characterized in that** a filter material is produced in the course of a wet-laid process by employing drawn, heatsealable, biodegradable and compostable polymeric fibers having a draw ratio which is in the range from 1.2 to 8.

8. The use of the filter material according to any one of claims 1 to 6 for producing tea bags, coffee bags or tea or coffee filters.

## Revendications

1. Matériau filtrant pour la fabrication de sachets filtrants ou de filtres à thé ou à café, composé de
- fibres polymères scellables à chaud, biodégradables et compostables,
- de fibres naturelles,
- et optionnellement de 0,1 à 5 %-poids d'additifs rapportés aux fibres polymères scellables à chaud, biodégradables et compostables, et
- optionnellement de matériau de germe de cristallisation,
**caractérisé en ce que**, concernant les fibres polymères scellables à chaud, biodégradables et compostables, il s'agit de fibres polymères étirées, scellables à chaud, biodégradables et compostables avec un rapport d'étirage de 1,2 à 8.

2. Matériau filtrant selon la revendication 1, dans lequel les fibres polymères étirées, scellables à chaud, biodégradables et compostables sont sélectionnées dans le groupe suivant de polymères :
des polyesters aliphatiques ou partiellement aromatiques :
A) à partir d'alcools aliphatiques bifonctionnels, de préférence des dialcools en C₂ à C₁₀ linéaires comme par exemple l'éthanediol, le butanediol, l'hexanediol ou de façon particulièrement préférée le butanediol et/ou éventuellement des alcools bifonctionnels cycloaliphatiques, de façon préférée avec 5 ou 6 atomes C dans le noyau cycloaliphatique, comme par exemple le cyclohexanediméthanol, et/ou partiellement ou entièrement à la place des diols des polyols monomères ou oligomères à base d'éthylène glycol, de propylène glycol, de tétrahydrofurane ou de copolymères en résultant avec des poids moléculaires jusqu'à 4 000, de préférence jusqu'à 1 000, et/ou éventuellement de faibles quantités d'alcools bifonctionnels ramifiés, de préférence des alkyldiols en C₃-C₁₂, comme par exemple le néopentylglycol, et en plus éventuellement de faibles quantités d'alcools à fonctionnalité plus élevée comme par exemple le 1,2,3-propantriol ou le triméthylolpropane, ainsi qu'à partir d'acides bifonctionnels aliphatiques, de préférence des acides alkyldicarboxyliques en C₂-C₁₂, comme par exemple et de préférence l'acide succinique, l'acide adipinique et/ou éventuellement des acides bifonctionnels aromatiques comme par exemple l'acide téréphtalique, l'acide phtalique, l'acide naphtaline-dicarboxylique et en plus éventuellement de faibles quantités d'acides à fonctionnalité plus élevée comme par exemple l'acide trimellitique ou
B) à partir de composants à fonctionnalités acide- et alcool, de préférence avec 2 à 12 atomes C dans la chaîne alkyle, par exemple l'acide hydroxybutyrique, l'acide hydroxy-valérénique, l'acide lactique ou leurs dérivés par exemple l'ε-caprolactone ou le dilactide,
ou d'un mélange et/ou d'un copolymère contenant A et B, les acides aromatiques ne représentant pas plus de 50 %-poids rapportés à tous les acides ;
des polyesteramides aliphatiques ou partiellement aromatiques :
C) à partir d'alcools aliphatiques bifonctionnels, de préférence des dialcools en C₂ à C₁₀ linéaires comme par exemple l'éthanediol, le butanediol, l'hexanediol ou de façon particulièrement préférée le butanediol et/ou éventuellement des alcools bifonctionnels cycloaliphatiques, de préférence avec 5 à 8 atomes C dans le noyau cycloaliphatique, comme par exemple le cyclohexanediméthanol, et/ou partiellement ou entièrement à la place des diols des polyols monomères ou oligomères à base d'éthylène glycol, de propylène glycol, de tétrahydrofurane ou de copolymères en résultant avec des poids moléculaires jusqu'à 4 000, de préférence jusqu'à 1 000, et/ou éventuellement de faibles quantités d'alcools bifonctionnels ramifiés, de préférence avec des acides alkyldicarboxyliques en C₂-C₁₂ comme par exemple le néopentylglycol, et en plus éventuellement de faibles quantités d'alcools à fonctionnalité plus élevée comme par exemple le 1,2,3-propantriol ou le triméthylolpropane, ainsi qu'à partir d'acides bifonctionnels aliphatiques, comme par exemple et de façon préférée l'acide succinique, l'acide adipinique et/ou éventuellement des acides bifonctionnels aromatiques comme par exemple l'acide téréphtalique, l'acide isophtalique, l'acide naphtaline-dicarboxylique et en plus éventuellement de faibles quantités d'acides à fonctionnalité plus élevée comme par exemple l'acide trimellitique ou
D) à partir de composants à fonctionnalités acide- et alcool, de préférence avec 2 à 12 atomes C dans la chaîne de carbone, par exemple l'acide hydroxybutyrique, l'acide hydroxyvalérénique, l'acide lactique ou leurs dérivés par exemple l'ε-caprolactone ou le dilactide,
ou d'un mélange et/ou d'un copolymère contenant C) et D),
les acides aromatiques ne représentant pas plus de 50 %-poids rapportés à tous les acides,
E) d'une fraction d'amide composée d'amines aliphatiques et/ou cycloaliphatiques bifonctionnels et/ou éventuellement de faibles quantités d'amines bifonctionelles ramifiées, la préférence étant donnée à des diamines en C₂ à C₁₀ aliphatiques linéaires, et de plus éventuellement de faibles quantités d'amines à fonctionnalité plus élevée, parmi les amines préférence est donnée à l'hexaméthylènediamine, à l'isophorondiamine et une préférence particulière est donnée à l'hexaméthylènediamine, ainsi que d'acides bifonctionnels linéaires et/ou cycloaliphatiques, de préférence avec 2 à 12 atomes C dans la chaîne alkyle ou le noyau en C₅ ou C₆ dans le cas d'acides cycloaliphatiques, de préférence l'acide adipinique, et/ou éventuellement de faibles quantités d'acides bifonctionnels ramifiés et/ou éventuellement d'acides bifonctionnels aromatiques comme par exemple l'acide téréphtalique, l'acide isophtalique, l'acide naphtaline-dicarboxylique et de plus éventuellement de faibles quantités d'acides à fonctionnalité plus élevée, de préférence avec 2 à 10 atomes C, ou
F) d'une fraction amide à partir de composants à fonctionnalités acide- et amine, de préférence avec 4 à 20 atomes C dans la chaîne cycloaliphatique, de préférence ω-laurinlactame, ε-caprolactame, de façon particulièrement privilégiée ε-caprolactame,
ou d'un mélange contenant E) et F) en tant que fraction amide,
la fraction ester C) et/ou D) représentant au moins 20 % en poids rapportés à la somme de C), D), E) et F), de préférence la fraction pondérale des structures esters représentant de façon privilégiée 20 à 80 % en poids, la fraction des structures amides 80 à 20 % en poids.

3. Matériau filtrant selon l'une des revendications 1 ou 2, le matériau filtrant étant fabriqué à partir de deux couches ou plus de composants différents, au moins une couche contenant des fibres naturelles, et une couche de fibres contenant des fibres polymères, le principe étant que les couches au moins au nombre de deux peuvent se pénétrer partiellement après la fabrication du matériau filtrant.

4. Matériau filtrant selon la revendication 3, la première couche présentant un grammage entre 8 et 40 g/m² et une perméabilité à l'air de 300 à 4000 L/m²·s (DIN ISO 9237).

5. Matériau filtrant selon la revendication 3, la deuxième couche avec les fibres polymères biodégradables et compostables présentant un grammage de 1 à 15 g/m².

6. Matériau filtrant selon l'une des revendications 3 à 5, la première couche se composant de fibres naturelles et étant constituée de façon résistante à l'humidité.

7. Procédé de fabrication d'un matériau filtrant selon l'une des revendications 1 à 6, **caractérisé en ce qu'**il est fabriqué un matériau filtrant dans le cadre d'un procédé de pose humide avec utilisation conjointe de fibres polymères étirées, scellables à chaud, biodégradables et compostables, avec un rapport d'étirage de 1,2 à 8.

8. Utilisation du matériau filtrant selon une des revendications 1 à 6 pour la fabrication de sachets de thé, de sachets de café, ou de de filtres à thé ou à café.
